(19) Europäisches Patentamt
European Patent Office
Office européen des brevets

(11) EP 2 238 664 B1

(12) EUROPÄISCHE PATENTSCHRIFT

(45) Veröffentlichungstag und Bekanntmachung des Hinweises auf die Patenterteilung:
22.03.2017 Patentblatt 2017/12

(51) Int Cl.:
H02H 3/40 (2006.01)        H02H 7/26 (2006.01)
H02H 3/05 (2006.01)

(21) Anmeldenummer: 08707551.1

(22) Anmeldetag: 31.01.2008

(86) Internationale Anmeldenummer:
PCT/EP2008/000880

(87) Internationale Veröffentlichungsnummer:
WO 2009/095040 (06.08.2009 Gazette 2009/32)

(54) **DISTANZSCHUTZANORDNUNG UND VERFAHREN ZUM ÜBERWACHEN EINER ELEKTRISCHEN ENERGIEÜBERTRAGUNGSLEITUNG**

DISTANCE PROTECTION AND METHOD FOR MONITORING AN ELECTRICAL POWER TRANSMISSION LINE

SYSTEME DE PROTECTION DE DISTANCE ET PROCEDE DE SURVEILLANCE D'UNE LIGNE DE TRANSPORT D'ENERGIE ELECTRIQUE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(43) Veröffentlichungstag der Anmeldung:
**13.10.2010 Patentblatt 2010/41**

(73) Patentinhaber: **Siemens Aktiengesellschaft**
**80333 München (DE)**

(72) Erfinder:
• **KEREIT, Matthias**
**12159 Berlin (DE)**
• **REICHENBACH, Gunther**
**90559 Burgthann (DE)**

(56) Entgegenhaltungen:
EP-A- 0 795 944        EP-A- 1 416 603
DE-A1- 19 920 654

• CHEN C-S ET AL: "A NEW ADAPTIVE PMU BASED PROTECTION SCHEME FOR TRANSPOSED/UNTRANSPOSED PARALLEL TRANSMISSION LINES" IEEE TRANSACTIONS ON POWER DELIVERY, IEEE SERVICE CENTER, NEW YORK, NY, US, Bd. 17, Nr. 2, 1. April 2002 (2002-04-01), Seiten 395-404, XP001162855 ISSN: 0885-8977

**Beschreibung**

Die Erfindung bezieht sich auf eine Distanzschutzanordnung gemäss Anspruch 1.

Distanzschutzanordnungen der beschriebenen Art können beispielsweise mit Distanzschutzgeräten der Baureihe 7SA522 der Firma Siemens gebildet werden. Bei diesen Distanzschutzgeräten wird beispielsweise als vorgegebener Leitungsimpedanzwert das 0,85-fache des Betrages der Leitungsimpedanz herangezogen, um die Größe eines Auslösegebietes festzulegen. Liegt dann nachfolgend eine vom Distanzschutzgerät gemessene Leiter-Leiter- oder Leiter-Erde-Impedanz innerhalb dieses Auslösegebietes, so wird ein Fehlersignal erzeugt.

Das Dokument EP1416603 offenbart eine Anordnung gemäss dem Oberbegriff des Anspruchs 1 und ein Verfahren gemäss dem Oberbegriff des Anspruchs 10.

Der Erfindung liegt die Aufgabe zugrunde, eine Distanzschutzanordnung anzugeben, mit der sich Fehlersignale noch zuverlässiger als bei bisherigen Distanzschutzanordnungen erzeugen lassen.

Diese Aufgabe wird erfindungsgemäß durch eine Distanzschutzanordnung mit den Merkmalen gemäß Anspruch 1 gelöst. Vorteilhafte Ausgestaltungen der erfindungsgemäßen Distanzschutzanordnung sind in Unteransprüchen angegeben.

Danach ist erfindungsgemäß vorgesehen, dass die Distanzschutzanordnung ein weiteres Gerät umfasst, das an dem anderen Ende der Energieübertragungsleitung angeschlossen sowie geeignet ist, Spannung und Strom an dem anderen Ende unter Bildung von zweiten Spannungs- und Strommesswerten zu messen, die Distanzschutzanordnung eine Leitungsimpedanzmesseinrichtung aufweist, die geeignet ist, unter Heranziehung der ersten und zweiten Spannungs- und Strommesswerte die Leitungsimpedanz der Energieübertragungsleitung zu berechnen und einen gemessenen Leitungsimpedanzwert bereitzustellen, und die Distanzschutzanordnung geeignet ist, diesen gemessenen Leitungsimpedanzwert bei der weiteren Überwachung der Energieübertragungsleitung zu berücksichtigen.

Ein wesentlicher Vorteil der erfindungsgemäßen Distanzschutzanordnung besteht darin, dass eine Neukalibrierung bzw. Neuparametrierung der Distanzschutzanordnung auf der Basis eines gemessenen Leitungsimpedanzwerts möglich ist, der während des normalen Betriebs der Distanzschutzanordnung gemessen wird. Eine solche Neukalibrierung bzw. Neuparametrierung kann somit in vorteilhafter Weise durchgeführt werden, ohne dass hierzu die zu überwachende Energieübertragungsleitung außer Betrieb genommen werden muss.

Vorzugsweise sind das Distanzschutzgerät und das weitere Gerät derart synchronisiert, dass die ersten und die zweiten Spannungs- und Strommesswerte zeitsynchron gemessen werden. Im Falle einer zeitsynchronen Messung lässt sich nämlich vermeiden, dass die ersten und die zweiten Spannungs- und Strommesswerte noch nachträglich mathematisch synchronisiert werden müssen, beispielsweise durch eine nachträgliche mathematische Abtastung.

Gemäß einer vorteilhaften Ausgestaltung ist vorgesehen, dass die Distanzschutzanordnung ein Warnmodul aufweist, das geeignet ist, den gemessenen Leitungsimpedanzwert mit dem vorgegebenen Leitungsimpedanzwert zu vergleichen und ein Warnsignal zu erzeugen, wenn die Abweichung zwischen dem gemessenen Leitungsimpedanzwert und dem vorgegebenen Leitungsimpedanzwert nach Betrag und/oder Phase einen vorgegebenen Schwellenwert überschreitet. Mit einem solchen Warnsignal kann beispielsweise der Betreiber der Energieübertragungsleitung bzw. der Betreiber der Distanzschutzanordnung davor gewarnt werden, dass die in Betrieb befindliche Distanzschutzanordnung unter Umständen nicht korrekt arbeitet und womöglich nicht ausreichend oder zu sehr schützt.

Die Distanzschutzanordnung weist ein Parametriermodul auf, das geeignet ist, den vorgegebenen Leitungsimpedanzwert des Distanzschutzgerätes durch den gemessenen Leitungsimpedanzwert zu ersetzen und den gemessenen Leitungsimpedanzwert als neuen vorgegebenen Leitungsimpedanzwert in dem Distanzschutzgerät zu parametrieren. Vorzugsweise ist das Distanzschutzgerät ebenfalls geeignet, nach einer Parametrierung durch das Parametriermodul das Fehlersignal unter Heranziehung des neuen vorgegebenen Leitungsimpedanzwertes zu erzeugen. Bei dieser Ausgestaltung kann somit eine selbsttätige Neuparametrierung der Distanzschutzanordnung erfolgen, sei es beispielsweise automatisch oder auf einen entsprechenden Parametrierungsbefehl des Betreibers der Distanzschutzanordnung hin.

Das Parametriermodul ist derart ausgestaltet, dass es den vorgegebenen Leitungsimpedanzwert des Distanzschutzgerätes durch den gemessenen Leitungsimpedanzwert nur dann ersetzt, wenn die Abweichung zwischen dem gemessenen Leitungsimpedanzwert und dem vorgegebenen Leitungsimpedanzwert nach Betrag und/oder Phase einen vorgegebenen Schwellenwert überschreitet.

Weist die Distanzschutzanordnung ein Warnmodul und ein Parametriermodul auf, so wird es als vorteilhaft angesehen, wenn ein Warnsignal erzeugt wird, wenn die Abweichung zwischen dem gemessenen Leitungsimpedanzwert und dem vorgegebenen Leitungsimpedanzwert nach Betrag und/oder Phase einen vorgegebenen Schwellenwert überschreitet, der größer als der Schwellenwert des Parametriermoduls ist.

Gemäß einer besonders bevorzugten Ausgestaltung der Distanzschutzanordnung ist vorgesehen, dass die Leitungsimpedanzmesseinrichtung durch eine Zentraleinrichtung gebildet ist, die von dem Distanzschutzgerät und dem weiteren Gerät getrennt ist und in die die ersten und zweiten Spannungs- und Strommesswerte eingespeist werden.

Gemäß einer anderen besonders bevorzugten Ausgestaltung der Distanzschutzanordnung ist vorgesehen, dass die Leitungsimpedanzmesseinrichtung in dem Distanzschutzgerät implementiert ist und durch ein Funktionsmodul des Distanzschutzgeräts gebildet ist, wobei das Funktionsmodul über eine Datenverbindung mit dem weiteren Gerät verbunden ist und über diese die zweiten Spannungs- und Strommesswerte des weiteren Gerätes erhält.

Gemäß einer wiederum anderen besonders bevorzugten Ausgestaltung der Distanzschutzanordnung ist vorgesehen, dass das Distanzschutzgerät über eine Datenverbindung mit dem weiteren Gerät verbunden ist und über diese die zweiten Spannungs- und Strommesswerte des weiteren Gerätes erhält und dass die Leitungsimpedanzmesseinrichtung in einer separaten, an das Distanzschutzgerät angeschlossenen Kontrolleinrichtung enthalten ist, die die ersten Spannungs- und Strommesswerte von dem Distanzschutzgerät unmittelbar und die zweiten Spannungs- und Strommesswerte von dem weiteren Gerät mittelbar erhält, nämlich über das Distanzschutzgerät.

Die Leitungsimpedanzmesseinrichtung wird vorzugsweise durch ein Programmmodul gebildet, das geeignet ist, mit Zeitstempeln versehene Störschriebe zumindest zweier elektrischer Geräte, nämlich zumindest die Störschriebe des Distanzschutzgeräts und die Störschriebe des weiteren Geräts, zu verarbeiten. Ein solches Programmmodul kann beispielsweise in kommerziell erhältlicher Schutzsoftware, wie beispielsweise die Software SIGRA der Firma Siemens, implementiert sein.

Bei dem weiteren, mit dem Distanzschutzgerät synchronisierten Gerät kann es sich beispielsweise um ein zweites Distanzschutzgerät handeln.

Die Erfindung bezieht sich außerdem auf ein Verfahren gemäss Anspruch 10.

Erfindungsgemäß ist bei einem solchen Verfahren vorgesehen, dass mit einem weiteren Gerät, das an dem anderen Ende der Energieübertragungsleitung angeschlossen ist, Spannung und Strom an dem anderen Ende unter Bildung von zweiten Spannungs- und Strommesswerten gemessen werden, unter Heranziehung der ersten und zweiten Spannungs- und Strommesswerte die Leitungsimpedanz der Energieübertragungsleitung berechnet und ein gemessener Leitungsimpedanzwert gebildet wird, und der gemessene Leitungsimpedanzwert bei der weiteren Überwachung der Energieübertragungsleitung berücksichtigt wird. Bezüglich der Vorteile des erfindungsgemäßen Verfahrens sei auf die obigen Ausführungen im Zusammenhang mit der erfindungsgemäßen Distanzschutzanordnung verwiesen. Vorteilhafte Ausgestaltungen des Verfahrens sind in Unteransprüchen angegeben.

Gemäß einer bevorzugten Ausgestaltung des Verfahrens ist vorgesehen, das mit dem jeweils vorgegebenen Leitungsimpedanzwert zumindest ein Auslösegebiet in der komplexen Impedanzebene gebildet wird und das Fehlersignal erzeugt wird, wenn zumindest eine mit den ersten Spannungs- und Strommesswerten gebildete Leiter-Erde-Impedanz oder eine mit den ersten Spannungs- und Strommesswerten gebildete Leiter-Leiter-Impedanz innerhalb des Auslösegebiets liegt.

Die Erfindung wird nachfolgend anhand von Ausführungsbeispielen näher erläutert; dabei zeigen beispielhaft

Figur 1          ein erstes Ausführungsbeispiel für eine erfindungsgemäße Distanzschutzanordnung, bei der eine Zentraleinrichtung mit einem Warnmodul ausgestattet ist,

Figuren 2, 3     ein zweites Ausführungsbeispiel für eine erfindungsgemäße Distanzschutzanordnung, bei der eine Zentraleinrichtung mit einem Parametriermodul ausgestattet ist,

Figuren 4, 5     ein drittes Ausführungsbeispiel für eine erfindungsgemäße Distanzschutzanordnung, bei der eine Zentraleinrichtung sowohl mit einem Warnmodul als auch mit einem Parametriermodul ausgestattet ist,

Figuren 6, 7     ein viertes Ausführungsbeispiel für eine erfindungsgemäße Distanzschutzanordnung, bei der eine offline arbeitende Zentraleinrichtung vorhanden ist,

Figur 8          ein fünftes Ausführungsbeispiel für eine erfindungsgemäße Distanzschutzanordnung, bei der zwei Distanzschutzgeräte jeweils mit einer Leitungsimpedanzmesseinrichtung ausgestattet sind,

Figur 9          ein sechstes Ausführungsbeispiel für eine erfindungsgemäße Distanzschutzanordnung, bei der eine Kontrolleinrichtung mit einer Leitungsimpedanzmesseinrichtung ausgestattet ist und Spannungs- und Strommesswerte von einem Distanzschutzgerät unmittelbar und von einem anderen mittelbar erhält,

Figur 10         ein Ausführungsbeispiel für ein Auslösegebiet mit MHO-Charakteristik,

Figur 11         ein Ausführungsbeispiel für ein polygonales Auslösegebiet und

Figur 12         ein Ausführungsbeispiel für ein Auslösegebiet mit einer Kreischarakteristik.

In den Figuren werden der Übersicht halber für identische oder vergleichbare Komponenten stets dieselben Bezugszeichen verwendet.

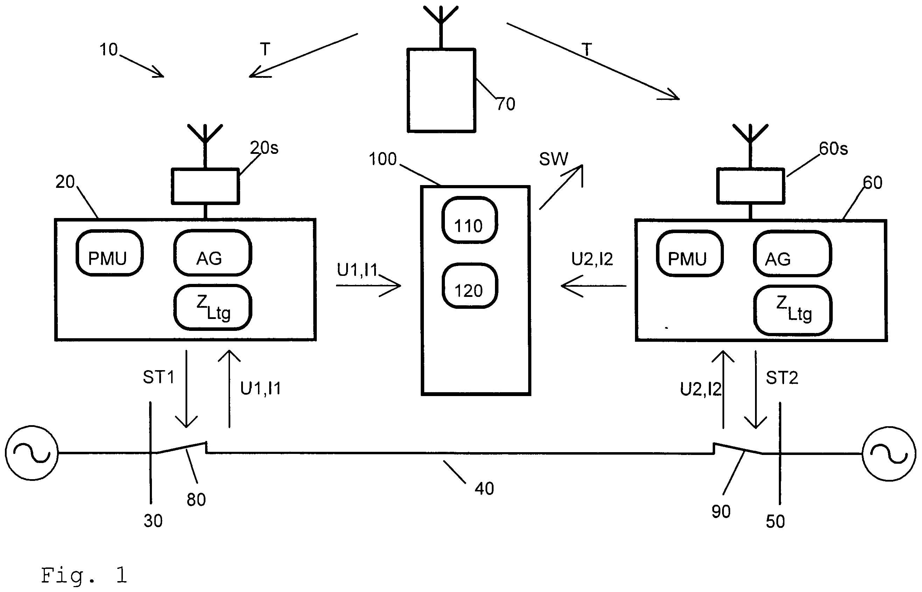

In der Figur 1 ist ein Ausführungsbeispiel für eine Distanzschutzanordnung 10 dargestellt. Ein erstes Distanzschutzgerät 20 der Distanzschutzanordnung 10 ist an einem Ende 30 einer dreiphasigen Energieübertragungsleitung 40 angeschlossen. Mit einem anderen Ende 50 der Energieübertragungsleitung 40 ist ein zweites Distanzschutzgerät 60 verbunden.

Mit den beiden Distanzschutzgeräten 20 und 60 steht eine Synchronisiereinrichtung 70 in Verbindung, die die beiden Distanzschutzgeräte 20 und 60 zeitlich synchronisiert, so dass diese zeitsynchrone erste und zweite Spannungs- und Strommesswerte U1, I1, U2, I2 erzeugen. Um diese Zeitsynchronisierung zu ermöglichen, sind die beiden Distanzschutzgeräte 20 und 60 jeweils mit entsprechenden Synchronisiereingängen 20s bzw. 60s ausgestattet. Bei dem Ausführungsbeispiel gemäß der Figur 1 wird die Synchronisiereinrichtung 70 durch einen GPS-Sender gebildet, der als Synchronisiersignal T ein GPS-Signal an die beiden Distanzschutzgeräte 20 und 60 übermittelt. Die Synchronisiereingänge 20s und 60s der beiden Distanzschutzgeräte 20 und 60 sind somit als GPS-Empfänger ausgebildet. Die Synchronisiereinrichtung 70 kann selbstverständlich auch anders ausgestaltet sein und als Synchronisiersignal T andere Signale als GPS-Signale übersenden; auch muss das Synchronisiersignal T nicht per Funk übermittelt werden, sondern kann alternativ auch drahtgebunden zu den beiden Distanzschutzgeräten 20 und 60 gelangen.

Das erste Distanzschutzgerät 20 misst an dem einen Ende 30 der Energieübertragungsleitung 40 die ersten Spannungs- und Strommesswerte U1 und I1 und bildet mit diesen Messwerten beispielsweise Leiter-Leiter-Impedanzen und Leiter-Erde-Impedanzen für die Phase-Phase-Schleifen und die Phase-Erde-Schleifen an dem einen Ende 30 der dreiphasigen Energieübertragungsleitung 40. Mit den so gebildeten Leiter-Leiter-Impedanzen bzw. Leiter-Erde-Impedanzen prüft das Distanzschutzgerät 20 nachfolgend, ob auf der Energieübertragungsleitung 40 ein Fehler aufgetreten ist. Dies kann beispielsweise dadurch geschehen, dass das Distanzschutzgerät prüft, ob die gebildeten Leiter-Erde-Impedanzen bzw. Leiter-Leiter-Impedanzen innerhalb oder außerhalb eines vorgegebenen Auslösegebiets AG liegen. Hierzu ist in dem Distanzschutzgerät 20 vorzugsweise für jede Phase-Phase-Schleife und für jede Phase-Erde-Schleife jeweils ein individuelles Auslösegebiet AG vorgegeben. Die Größe und/oder die Form der Auslösegebiete AG hängt unmittelbar oder mittelbar von dem Betrag und/oder der Phase eines in dem Distanzschutzgerät 20 vorgegebenen Leitungsimpedanzwerts $Z_{Ltg}$ ab. Der vorgegebenen Leitungsimpedanzwert $Z_{Ltg}$ gibt mittelbar oder unmittelbar die Leitungsimpedanz der Energieübertragungsleitung 40 an.

Stellt das erste Distanzschutzgerät 20 nun fest, dass eine oder mehrere der gemessenen Leiter-Leiter-Impedanzen oder eine oder mehrere der gemessenen Leiter-Erde-Impedanzen innerhalb des jeweils vorgegebenen Auslösegebiets AG liegen, so erzeugt es ein einen Fehler auf der Energieübertragungsleitung 40 angebendes Fehlersignal. Ein solches Fehlersignal kann beispielsweise in Form eines Auslösesignals ST1 erzeugt werden, mit dem ein Schalter 80 der Energieübertragungsleitung 40 geöffnet und der Stromfluss unterbrochen wird.

Das zweite Distanzschutzgerät 60 kann beispielsweise mit dem ersten Distanzschutzgerät 20 identisch sein und in vergleichbarer Weise das andere Ende 50 der Energieübertragungsleitung 40 überwachen. So kann das zweite Distanzschutzgerät 60 beispielsweise die zweiten Spannungs- und Strommesswerte U2 und I2 bilden und mit diesen unter Heranziehung entsprechend vorgegebener Auslösegebiete AG überprüfen, ob ein Fehler auf der Energieübertragungsleitung 40 aufgetreten ist oder nicht. Ist dies der Fall, so wird das zweite Distanzschutzgerät 60 in vergleichbarer Weise ein Auslösesignal ST2 als Fehlersignal erzeugen, mit dem ein Schalter 90 der Energieübertragungsleitung 40 geöffnet und der Stromfluss unterbrochen wird.

Wie sich den obigen Ausführungen entnehmen lässt, ist für die richtige Erzeugung des Fehlersignals bzw. des Auslösesignals ST1 bzw. ST2 von Bedeutung, dass der für die Definition der Auslösegebiete AG herangezogene Leitungsimpedanzwert $Z_{Ltg}$ in dem Distanzschutzgerät 20 bzw. 60 richtig vorgegeben ist. Gehen die Distanzschutzgeräte 20 bzw. 60 nämlich von falschen Leitungsimpedanzwerten $Z_{Ltg}$ aus, so können bei dem Erzeugen der Auslösesignale ST1 bzw. ST2 erhebliche Auslösefehler auftreten.

Um solche Auslösefehler zu vermeiden bzw. deren Risiko zu reduzieren, ist die Distanzschutzanordnung 10 gemäß der Figur 1 zusätzlich mit einer Zentraleinrichtung 100 ausgestattet. Die Zentraleinrichtung 100 weist eine Leitungsimpedanzmesseinrichtung 110 sowie ein Warnmodul 120 auf.

Die Zentraleinrichtung 100 steht leitungsgebunden oder über Funk mit den beiden Distanzschutzgeräten 20 und 60 in Verbindung und erhält von diesen die gemessenen ersten und zweiten Spannungs- und Strommesswerte U1, I1, U2 und I2 und ermittelt mit diesen einen Leitungsimpedanzwert $Z_{Ltg}'$ - nachfolgend als gemessener Leitungsimpedanzwert $Z_{Ltg}'$ bezeichnet-, der sich auf die Energieübertragungsleitung 40 bezieht und deren gemessene Leitungsimpedanz angibt.

Die Funktion des Warnmoduls 120 besteht darin, den gemessenen Leitungsimpedanzwert $Z_{Ltg}'$ mit den in den beiden Distanzschutzgeräten 20 und 60 vorgegebenen Leitungsimpedanzwerten $Z_{Ltg}$ zu vergleichen und ausgangsseitig ein Warnsignal SW zu erzeugen, wenn die Abweichung zwischen dem gemessenen Leitungsimpedanzwert $Z_{Ltg}'$ und dem vorgegebenen Leitungsimpedanzwert $Z_{Ltg}$ nach Betrag und/oder Phase zu hoch ist und einen vorgegebenen Schwellenwert überschreitet. Der Netzbetreiber der Energieübertragungsleitung 40 wird durch das Warnsignal SW somit davon informiert, dass die beiden Distanzschutzgeräte 20 und 60 falsch, zumindest nicht optimal, parametriert sind und somit womöglich nicht zuverlässig genug arbeiten werden: So kann es nämlich aufgrund des falsch oder ungenau vorgegebenen Leitungsimpedanzwertes $Z_{Ltg}$ dazu kommen, dass Auslösesignale ST1 bzw. ST2 im Falle eines Fehlers gar nicht oder, alternativ, ohne Anlass erzeugt werden. Der Netzbetreiber hat somit die Möglichkeit, bei Vorliegen des Warnsignals SW eine Neuparametrierung der beiden Distanzschutzgeräte 20 und 60 zu veranlassen.

Nachfolgend soll die Arbeitsweise der Leitungsimpedanzmesseinrichtung 110 beispielhaft erläutert werden; dabei werden folgende Abkürzungen verwendet:

- Für die ersten Spannungsmesswerte U1 : UL1E, 1, UL2E,1, UL3E,1 als Leiter-Erde-Spannungen an dem ersten Ende 30 der dreiphasigen Energieübertragungsleitung 40;
- für die zweiten Spannungsmesswerte U2: UL1E, 2, UL2E,2, UL3E,2 als Leiter-Erde-Spannungen an dem anderen Ende 50 der dreiphasigen Energieübertragungsleitung 40;
- für die ersten Strommesswerte I1: IL1,1, IL2,1, IL3,1 als Phasenströme an dem ersten Ende 30 der dreiphasigen Energieübertragungsleitung 40;
- für die zweiten Strommesswerte I2 : IL1,2, IL2,2, IL3,2 als Phasenströme an dem zweiten Ende 50 der dreiphasigen Energieübertragungsleitung 40.

Liegt ein Lastfluß zwischen den beiden Enden 30 und 50 der Energieübertragungsleitung 40 vor, so kann über den Spannungsabfall über der Energieübertragungsleitung 40 und dem Stromfluß in der Energieübertragungsleitung 40 die Leitungsimpedanz $Z_{Ltg}$' an dem einen Ende 30 bestimmt werden gemäß:

$$\underline{Z}_{L1} = \frac{\underline{U}_{L1E,1} - \underline{U}_{L1E,2}}{\underline{I}_{L1,1}}$$

$$\underline{Z}_{L2} = \frac{\underline{U}_{L2E,1} - \underline{U}_{L2E,2}}{\underline{I}_{L2,1}}$$

$$\underline{Z}_{L3} = \frac{\underline{U}_{L3E,1} - \underline{U}_{L3E,2}}{\underline{I}_{L3,1}}$$

woraus sich dann $Z'_{Ltg}$ ermitteln lässt gemäß:

$$\underline{Z}'_{Ltg} = \frac{\underline{Z}_{L1} + \underline{Z}_{L2} + \underline{Z}_{L3}}{3}$$

Entsprechendes gilt für die Messung an dem anderen Ende 50 der Energieübertragungsleitung 40.

Bei der obigen Berechnung wurde beispielhaft davon ausgegangen, dass

- kein Fehlerzustand auf der Energieübertragungsleitung 40 vorliegt, dass also kein Auslösesignal ST1 oder ST2 erzeugt wird, und
- sich an der Energieübertragungsleitung 40 kein Abzweig befindet.

Um Messfehler zu vermeiden, sollte eine Messung der Leitungsimpedanz vorzugsweise nur dann erfolgen, wenn zumindest eine der nachfolgenden Bedingungen, besonders bevorzugt alle der nachfolgenden Bedingungen, erfüllt sind:

- Die Phasenströme sind an beiden Enden 30 und 50 näherungsweise gleich.
- Die Phasenströme sind ausreichend groß und überschreiten einen vorgegebenen Schwellenwert <Iph>.
- Der Spannungsabfall über der Energieübertragungsleitung 40 ist genügend groß und überschreitet einen vorgegebenen Schwellenwert <Umin>.
- Der Nullstrom ist an beiden Enden 30 und 50 näherungsweise gleich 0.

Die Spannungs- und Strommesswerte U1, I1, U2, I2 können beispielsweise in Form von Zeigermessgrößen zu der Zentraleinrichtung 100 übertragen werden. Hierzu sind die beiden Distanzschutzgeräte 20 und 40 vorzugsweise mit Zeigermesseinheiten PMU ausgestattet, die eine Zeigerbildung nach dem Standard IEEE C37.118 durchführen können.

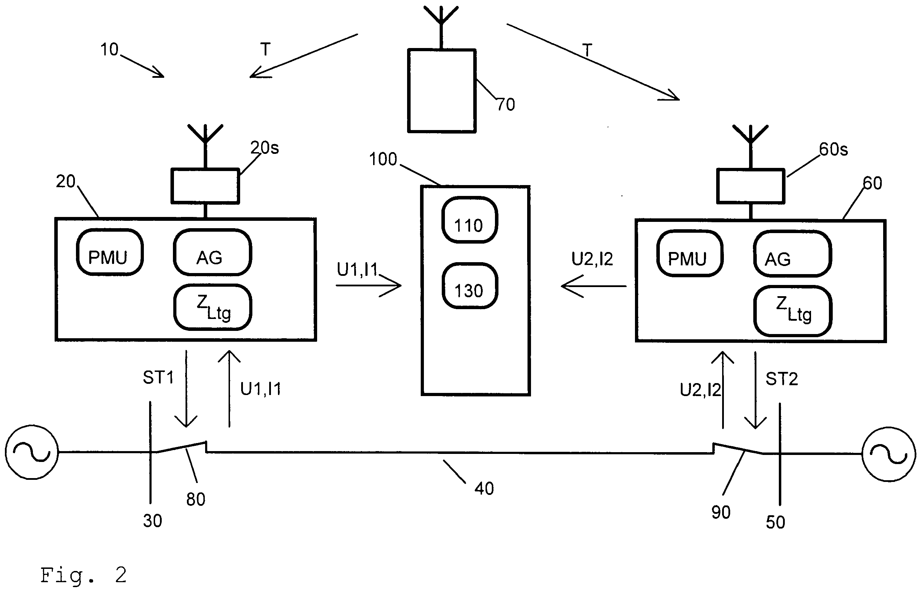

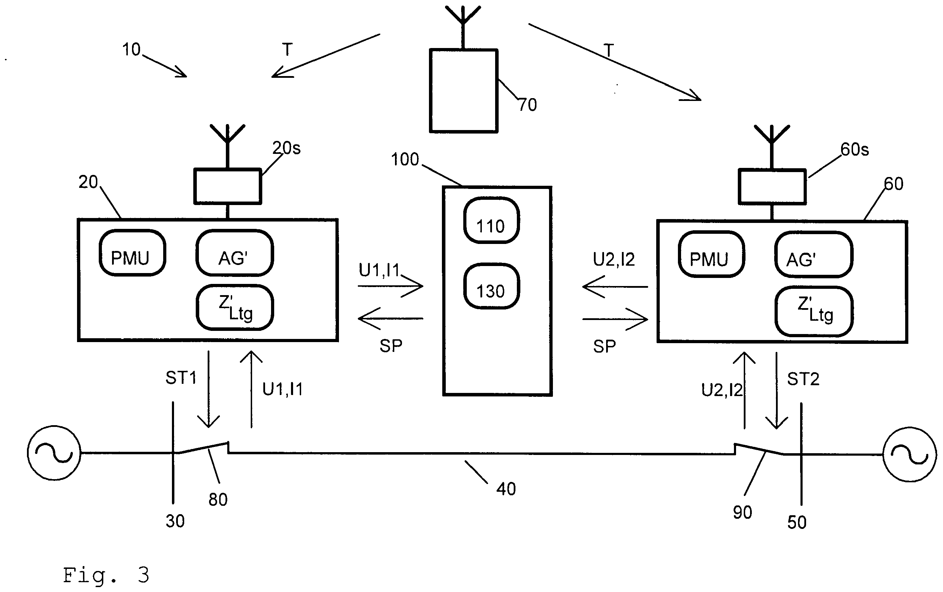

In den Figuren 2 und 3 ist ein zweites Ausführungsbeispiel für die Distanzschutzanordnung 10 dargestellt. Man erkennt, dass die Zentraleinrichtung 100 anstelle des Warnmoduls 120 gemäß Figur 1 ein Parametriermodul 130 aufweist. Die Funktion des Parametriermoduls 130 besteht darin, eine Neuparametrierung der beiden Distanzschutzgeräte 20 und 60 selbsttätig, automatisch oder auf eine entsprechende Bedienereingabe des Netzbetreibers hin, zu veranlassen und den jeweils neu gemessenen Leitungsimpedanzwert $Z_{Ltg}$' in den beiden Distanzschutzgeräten 20 und 60 mittelbar oder unmittelbar derart einzugeben, dass entsprechende neue Auslösegebiete AG' erzeugt werden, die sich auf den gemessenen Leitungsimpedanzwert $Z_{Ltg}$' beziehen (vgl. Figur 3).

Um eine solche Parametrierung auszulösen, erzeugt das Parametriermodul 130 ausgangsseitig ein Parametriersignal SP, das sich inhaltlich auf den neu gemessenen Leitungsimpedanzwert $Z_{Ltg}$' bezieht und mit dem eine entsprechende Anpassung der Auslösegebiete AG innerhalb der beiden Distanzschutzgeräte 20 und 60 hervorgerufen wird.

Die Übertragung der Spannungs- und Strommesswerte von den Distanzschutzgeräten 20 und 60 zu der Zentraleinrichtung 100 sowie die Übertragung der Parametriersignale SP von der Zentraleinrichtung 100 zu den beiden Distanzschutzgeräten 20 und 60 erfolgt vorzugsweise nach dem Standard IEEE 61850.

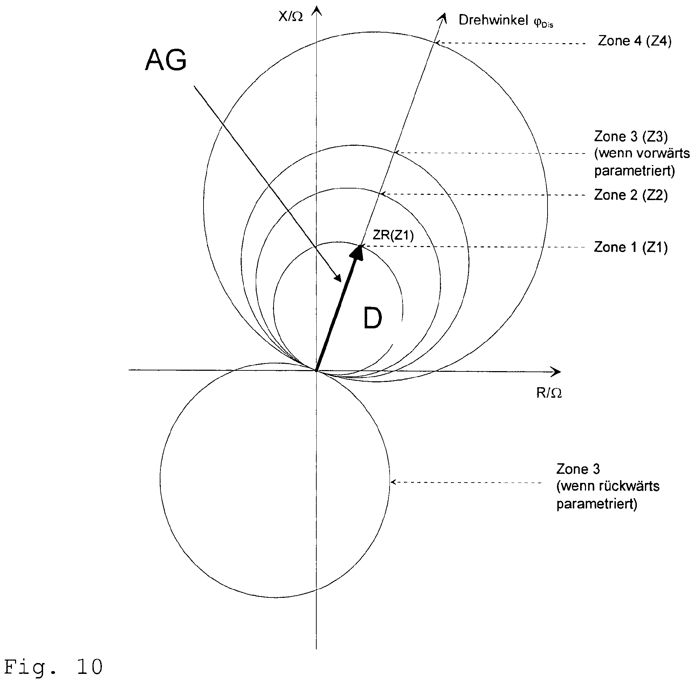

Handelt es sich bei dem Auslösegebiet AG beispielsweise um ein Auslösegebiet mit einer MHO-Charakteristik, wie sie beispielhaft in der Figur 10 gezeigt ist, so wird das Parametriermodul 130 den Durchmesser D und den Drehwinkel φDis des neuen Auslösegebiets AG' in Abhängigkeit von dem neu gemessenen Leitungsimpedanzwert $Z_{Ltg}$' beispielsweise wie folgt vorgegeben:

$$D = a * |Z_{Ltg}'|$$

und

$$\varphi Dis = \arctan(Z_{Ltg}')$$

Der Parameter a kann beispielsweise 0,85 betragen.

Die in der Figur 10 gezeigten Auslösekreise für die Zonen 2 bis 4 können in entsprechender oder vergleichbarer Weise umparametriert werden, jedoch ist dies fakultativ.

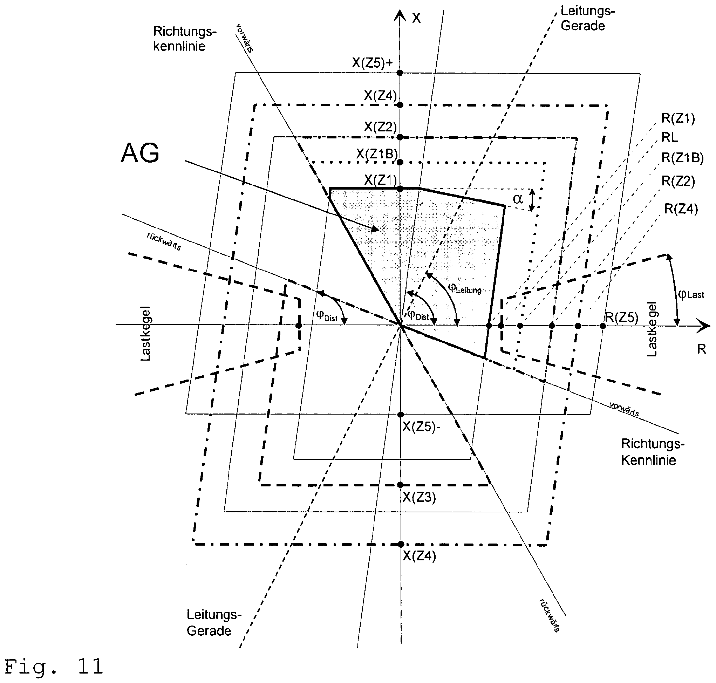

Bei polygonalen Auslösegebieten AG, wie sie beispielhaft in der Figur 11 gezeigt sind, kann das Parametriermodul 130 die Form und/oder Größe der Auslösegebiete AG zum Beispiel ändern, indem es den Wert X(Z1) in Abhängigkeit von dem gemessenen Leitungsimpedanzwert $Z_{Ltg}$' wie folgt einstellt:

$$X(Z1) = 0,85 * Im(Z_{Ltg}')$$

Der Winkel φLeitung der Leitungsgerade kann beispielsweise derart eingestellt werden, dass gilt:

$$\varphi Leitung = \arctan(Z_{Ltg}')$$

Die übrigen in der Figur 11 angegebenen Parameter (vgl. X(Z1B), X(Z2), X(Z3), X(Z4), X(Z5)+, X(Z5)-, R(Z1), RL, R(Z1B), R(Z2), R(Z4), R(Z5), φLast) können ebenfalls in Abhängigkeit von dem gemessenen Leitungsimpedanzwert $Z_{Ltg}$' verändert werden, sofern und soweit sie von der Leitungsimpedanz der Energieübertragungsleitung 40 abhängen, jedoch ist dies fakultativ.

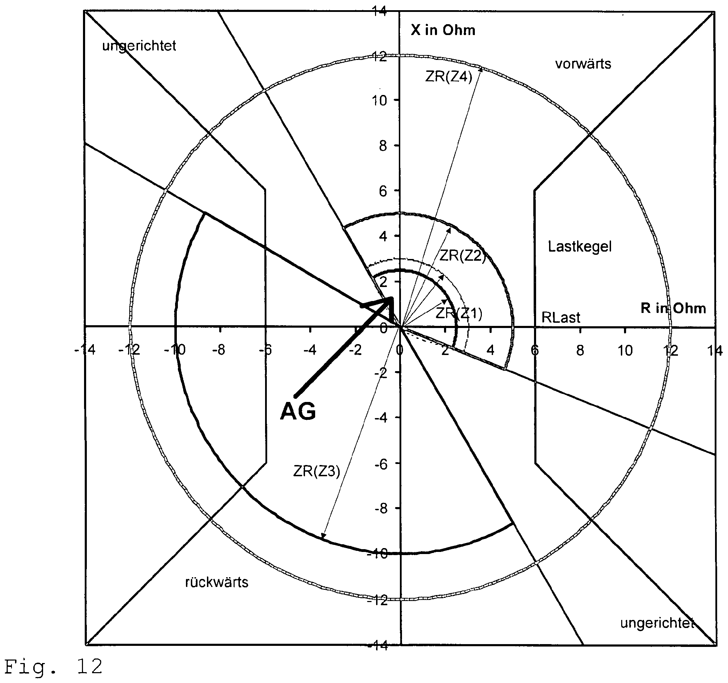

Bei einem Auslösegebiet AG mit Kreischarakteristik, wie es beispielhaft die Figur 12 zeigt, kann in entsprechender Weise der Radius ZR(Z1) der kreissektorförmigen Auslösegebiete AG neu bestimmt werden, zum Beispiel wie folgt:

$$ZR(Z1) = 0,85 * |Z_{Ltg}|$$

Die übrigen in der Figur 12 angegebenen Parameter (vgl. ZR(Z2), ZR(Z3) und ZR(Z4) können ebenfalls in Abhängigkeit von dem gemessenen Leitungsimpedanzwert $Z_{Ltg}$' verändert werden, sofern und soweit sie von der Leitungsimpedanz der Energieübertragungsleitung 40 abhängen, jedoch ist dies fakultativ.

Die oben beschriebene Anpassung der Auslösegebiete kann bei Leiter-Leiter-Schleifen und Leiter-Erde-Schleifen beispielsweise in identischer Weise vorgenommen werden. Alternativ können für Leiter-Leiter-Schleifen und Leiter-Erde-Schleifen auch unterschiedliche Arten der Neuparametrierung und unterschiedliche Arten der Anpassung der Auslösegebiete vorgesehen werden: In einem solchen Fall wird beispielsweise auch der gemessene Leitungsimpedanzwert $Z_{Ltg}$' bei der Neuparametrierung der Auslösegebiete für Leiter-Leiter-Schleifen und Leiter-Erde-Schleifen in unterschiedlicher Weise berücksichtigt werden. Beispielsweise kann bei der Neuparametrierung der Auslösegebiete bei Leiter-Erde-Schleifen ausschließlich der Leitungswinkel φLeitung der Leitungsgerade eingestellt werden, beispielsweise wie folgt:

$$\varphi Leitung = \arctan(Z_{Ltg}') ,$$

wobei der Absolutbetrag des gemessenen Leitungsimpedanzwerts $Z_{Ltg}$' beispielsweise unberücksichtigt bleibt.

Vorzugsweise ist das Parametriermodul 130 derart ausgestaltet, dass es eine Neuparametrierung der beiden Distanzschutzgeräte 20 und 60 nur dann vornimmt, wenn die Abweichung des gemessenen Leitungsimpedanzwertes $Z_{Ltg}$' von den zuvor vorgegebenen Leitungsimpedanzwerten $Z_{Ltg}$ nach Betrag und/oder Phase einen vorgegebenen Schwellenwert überschreitet.

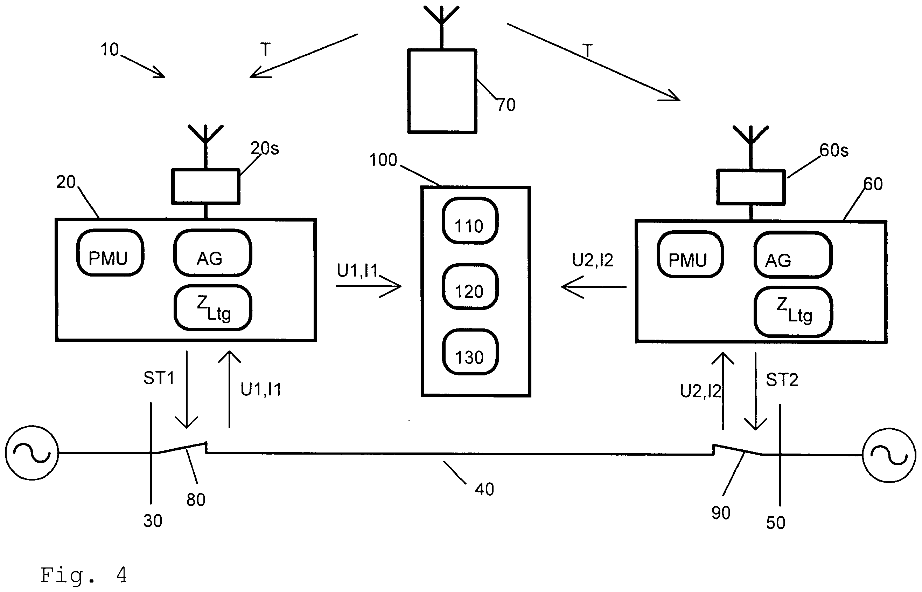

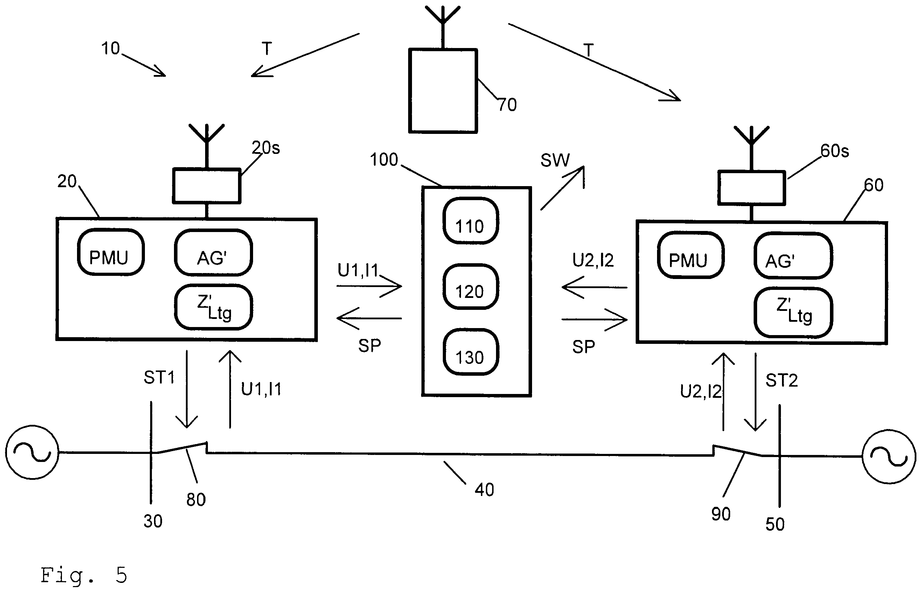

In den Figuren 4 und 5 ist ein drittes Ausführungsbeispiel für eine Distanzschutzanordnung 10 gezeigt. Bei diesem Ausführungsbeispiel ist die Zentraleinrichtung 100 sowohl mit einem Warnmodul 120 als auch mit einem Parametriermodul 130 ausgestattet.

Vorzugsweise sind das Warnmodul 120 und das Parametriermodul 130 bezüglich ihrer Arbeitsweise aufeinander abgestimmt. Beispielsweise ersetzt das Parametriermodul 130 den vorgegebenen Leitungsimpedanzwert $Z_{Ltg}$ durch den jeweils neu gemessenen Leitungsimpedanzwert $Z_{Ltg}$' nur dann (vgl. Figur 5), wenn die Abweichung zwischen dem gemessenen Leitungsimpedanzwert $Z_{Ltg}$' und dem zuvor vorgegebenen Leitungsimpedanzwert $Z_{Ltg}$ nach Betrag und/oder Phase einen vorgegebenen Schwellenwert überschreitet.

Das Warnmodul 120 erzeugt ein Warnsignal SW vorzugsweise nur dann, wenn trotz der Interaktion des Parametriermoduls 130 und der Neuparametrierung der beiden Distanzschutzgeräte 20 und 60 ein weiteres Ansteigen der Abweichung zwischen dem gemessenen Leitungsimpedanzwert $Z_{Ltg}$' und dem jeweils zuvor vorgegebenen Leitungsimpedanzwert $Z_{Ltg}$ festzustellen ist und diese Abweichung einen vorgegebenen weiteren Schwellenwert, der vorzugsweise größer als der zuvor genannte Schwellenwert der Parametriereinrichtung ist, überschritten wird.

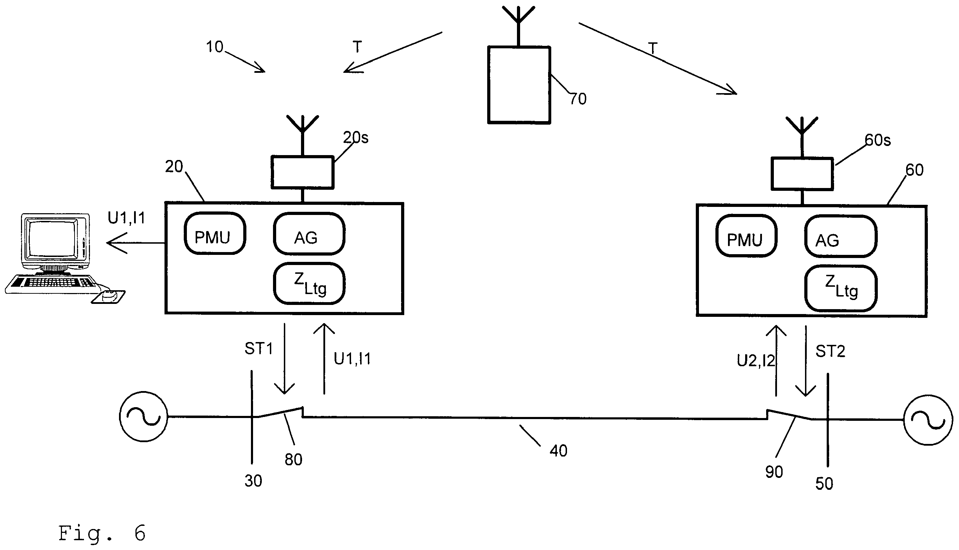

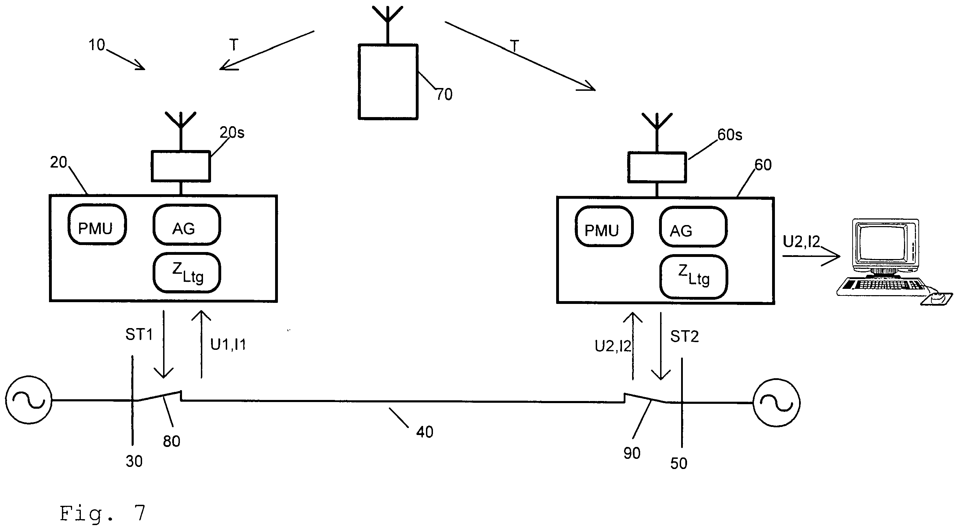

In den Figuren 6 und 7 ist ein Ausführungsbeispiel für eine Distanzschutzanordnung 10 gezeigt, bei der die Zentraleinrichtung 100 offline arbeitet und beispielsweise durch einen portablen PC (zum Beispiel Laptop oder Notebook, etc.) gebildet ist.

Zur Übertragung der ersten Spannungs- und Strommesswerte U1 und I1 wird die Zentraleinrichtung 100 beispielsweise zunächst an das erste Distanzschutzgerät 20 angeschlossen, um die in dem Distanzschutzgerät 20 aufgenommenen und abgespeicherten Spannungs- und Strommesswerte U1 und I1 abzufragen, wie dies die Figur 6 zeigt.

Anschließend wird die Zentraleinrichtung 100 an das zweite Distanzschutzgerät 60 angeschlossen, um von diesem die zweiten Spannungs- und Strommesswerte U2 und I2 zu erhalten; dies zeigt beispielhaft die Figur 7. Nachfolgend kann die Zentraleinrichtung 100 im Offlinebetrieb die von den beiden Distanzschutzgeräten 20 und 60 aufgenommenen ersten und zweiten Spannungs- und Strommesswerte U1, U2, I1, I2 auswerten und mit diesen einen gemessenen Leitungsimpedanzwert $Z_{Ltg}$' bilden, wie dies oben bereits im Detail erläutert worden ist.

Mit diesem gemessenen Leitungsimpedanzwert $Z_{Ltg}$' kann die Zentraleinrichtung 100 anschließend ein Warnsignal erzeugen, wie dies oben im Zusammenhang mit der Figur 1 beispielhaft erklärt worden ist, und/oder ein Parametriersignal erzeugen, um die beiden Distanzschutzgeräte 20 und 60 im Falle einer falschen oder ungenauen Parametrierung neu zu parametrieren; bezüglich der Parametrierung sei auf die Ausführungen im Zusammenhang mit der Figur 2 verwiesen.

Die Leitungsimpedanzmesseinrichtung 110, die zum Erzeugen des gemessenen Leitungsimpedanzwertes $Z_{Ltg}$' eingesetzt wird, kann in der Zentraleinrichtung 100 beispielsweise durch ein Programmmodul gebildet sein, das geeignet ist, mit Zeitstempeln versehene Störschriebe der beiden Distanzschutzgeräte 20 und 60 zum Zwecke der Bildung eines gemessenen Leitungsimpedanzwertes $Z_{Ltg}$' - vorzugsweise in der oben beschriebenen Weise - zu verarbeiten.

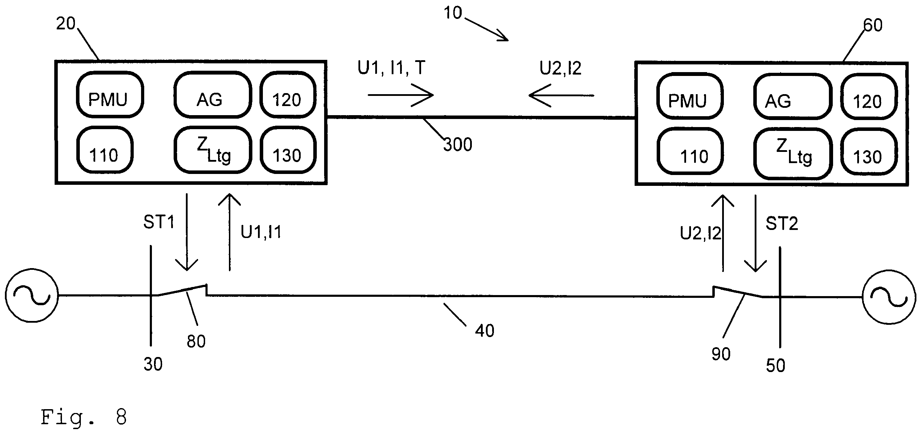

In der Figur 8 ist ein Ausführungsbeispiel für eine Distanzschutzanordnung 10 gezeigt, bei der eine Zentraleinrichtung 100 und auch eine Synchroniereinrichtung 70 fehlen. Stattdessen sind die beiden Distanzschutzgeräte 20 und 60 jeweils mit einer Leitungsimpedanzmesseinrichtung 110 sowie mit einem Warnmodul 120 und einem Parametriermodul 130 ausgestattet. Die beiden Distanzschutzgeräte 20 und 60 stehen über eine Datenverbindung 300 miteinander in Verbindung und übertragen über diese Datenverbindung 300 ihre jeweiligen Spannungs- und Strommesswerte zu dem jeweils anderen Distanzschutzgerät. Mit anderen Worten überträgt also das erste Distanzschutzgerät 20 seine ersten Spannungs- und Strommesswerte U1 und I1 an das zweite Distanzschutzgerät 60, und das zweite Distanzschutzgerät 60 überträgt seine zweiten Spannungs- und Strommesswerte U2, I2 zu dem ersten Distanzschutzgerät 20. In den beiden Distanzschutzgeräten 20 und 60 liegen daher jeweils sowohl die selbst gemessenen eigenen Spannungs- und Strommesswerte als auch die Spannungs- und Strommesswerte vom jeweils anderen Ende der Energieübertragungsleitung 40 vor. Außerdem wird zur Synchronisation ein Synchronisierungssignal T übertragen, beispielsweise von dem ersten, als "Master" fungierenden Distanzschutzgerät 20 zu dem zweiten, als "Slave" fungierenden Distanzschutzgerät 60.

Aufgrund der Übertragung der Spannungs- und Strommesswerte über die Datenleitung 300 sind die beiden Leitungsimpedanzmesseinrichtungen 110 in den beiden Distanzschutzgeräten 20 und 60 in der Lage, jeweils die Leitungsimpedanz der Energieübertragungsleitung 40 zu messen und einen gemessenen Leitungsimpedanzwert $Z_{Ltg}$' zu erzeugen.

Sobald der entsprechende Leitungsimpedanzwert $Z_{Ltg}$' vorliegt, kann das Warnmodul 120 ein entsprechendes Warnsignal erzeugen, wie dies bereits oben im Zusammenhang mit der Figur 1 erläutert worden war, damit ein Betreiber der Energieübertragungsleitung 40 entsprechende Maßnahmen zum Neuparametrieren der Distanzschutzgeräte ergreifen kann.

Zusätzlich oder alternativ kann das Parametriermodul 130 automatisch oder auf eine entsprechende Eingabe des Betreibers der Energieübertragungsleitung 40 hin eine Neuparametrierung des jeweiligen Distanzschutzgerätes 20 bzw. 60 hervorrufen, indem es unter Heranziehung des neu gemessenen Leitungsimpedanzwertes $Z_{Ltg}$' ein angepasstes Auslösegebiet bzw. angepasste Auslösegebiete bildet, damit eine Erzeugung der Auslösesignale ST1 bzw. ST2 auf der Basis der gemessenen aktuellen Leitungsimpedanz der Energieübertragungsleitung 40 erfolgen kann.

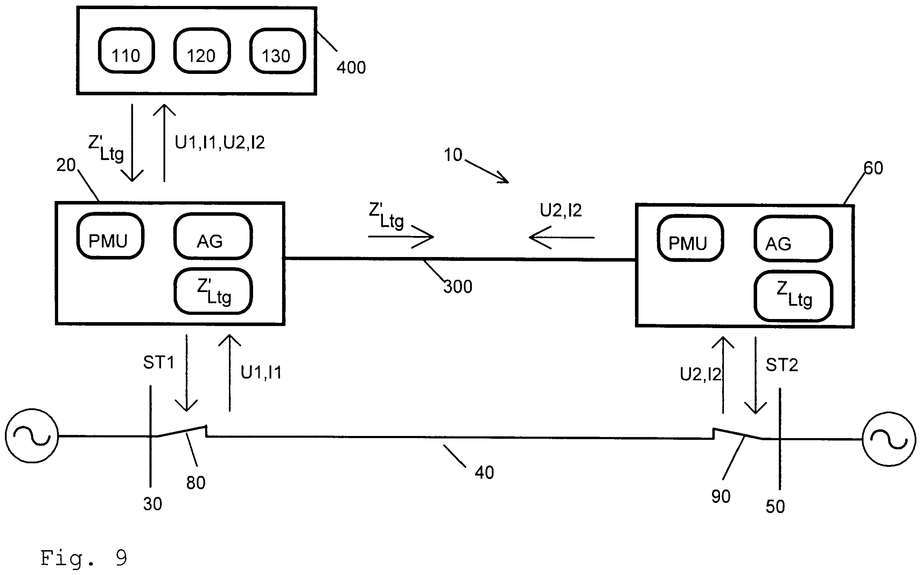

In der Figur 9 ist ein Ausführungsbeispiel für eine Distanzschutzanordnung 10 gezeigt, bei der eine Kontrolleinrichtung 400 an das erste Distanzschutzgerät 20 angeschlossen ist. Die Kontrolleinrichtung 400 weist eine Leitungsimpedanzmesseinrichtung 110, ein Warnmodul 120 sowie ein Parametriermodul 130 auf. Die Kontrolleinrichtung 400 fragt von dem ersten Distanzschutzgerät 20 die ersten Spannungs- und Strommesswerte U1 und I1 ab, die von dem ersten Distanzschutzgerät 20 aufgenommen worden sind. Außerdem fragt die Kontrolleinrichtung 400 die zweiten Spannungs- und Strommesswerte U2 und I2 des zweiten Distanzschutzgerätes 60 ab, die über die Datenverbindung 300 zu dem ersten Distanzschutzgerät 20 gelangt sind. Die Übertragung der zweiten Spannungs- und Strommesswerte U2, I2 von dem zweiten Distanzschutzgerät 60 erfolgt also mittelbar, und zwar unter Vermittlung des ersten Distanzschutzgerätes 20.

Nachdem die ersten und zweiten Spannungs- und Strommesswerte U1, I1, U2, I2 zu der Kontrolleinrichtung 400 gelangt sind, kann die Leitungsimpedanzmesseinrichtung 110 die aktuelle Leitungsimpedanz der Energieübertragungsleitung 40 bestimmen und einen entsprechenden gemessenen Leitungsimpedanzwert $Z_{Ltg}$' bestimmen.

Das Warnmodul 120 hat somit Gelegenheit, ein entsprechendes Warnsignal zu erzeugen, wenn der gemessene Leitungsimpedanzwert nach Betrag oder Phase zu sehr von dem in den beiden Distanzschutzgeräten 20 und 60 vorgegebenen Leitungsimpedanzwert $Z_{Ltg}$ abweicht.

Alternativ oder zusätzlich kann das Parametriermodul 130 eine Neuparametrierung der beiden Distanzschutzgeräte 20 und 60 auslösen, wenn die Abweichung zwischen dem gemessenen Leitungsimpedanzwert $Z_{Ltg}$' und dem in den beiden Distanzschutzgeräten 20 und 60 vorhandenen Leitungsimpedanzwert $Z_{Ltg}$ zu groß ist. Eine solche Neuparametrierung zeigt die Figur 9 ebenfalls beispielhaft.

**Patentansprüche**

1. Distanzschutzanordnung (10) zum Überwachen einer elektrischen Energieübertragungsleitung (40),

   - mit einem Distanzschutzgerät (20), das an einem Ende (30) der Energieübertragungsleitung angeschlossen ist und geeignet ist, Spannung und Strom an dem einen Ende unter Bildung von ersten Spannungs- und Strommesswerten (U1, I1) zu messen,
   - wobei das Distanzschutzgerät außerdem geeignet ist, mit den ersten Spannungs- und Strommesswerten unter Heranziehung eines vorgegebenen Leitungsimpedanzwertes ($Z_{Ltg}$), der sich auf die Leitungsimpedanz der Energieübertragungsleitung nach Betrag und/oder Phase bezieht, die elektrische Energieübertragungsleitung auf einen Fehler hin zu überwachen und gegebenenfalls ein Fehlersignal (ST1) zu erzeugen, das den Fehler auf der Energieübertragungsleitung anzeigt, und wobei
   - die Distanzschutzanordnung ein weiteres Gerät (60) umfasst, das an dem anderen Ende (50) der Energieübertragungsleitung angeschlossen sowie geeignet ist, Spannung und Strom an dem anderen Ende unter Bildung von zweiten Spannungs- und Strommesswerten (U2, I2) zu messen,

**dadurch gekennzeichnet, dass**

   - die Distanzschutzanordnung eine Leitungsimpedanzmesseinrichtung (110) aufweist, die geeignet ist, unter Heranziehung der ersten und zweiten Spannungs- und Strommesswerte die Leitungsimpedanz der Energieübertragungsleitung zu berechnen und einen gemessenen Leitungsimpedanzwert ($Z_{Ltg}$') bereitzustellen, und
   - die Distanzschutzanordnung geeignet ist, diesen gemessenen Leitungsimpedanzwert bei der weiteren Überwachung der Energieübertragungsleitung zu berücksichtigen, wobei
   - die Distanzschutzanordnung ein Parametriermodul (130) aufweist, das geeignet ist, den vorgegebenen Leitungsimpedanzwert des Distanzschutzgerätes durch den gemessenen Leitungsimpedanzwert zu ersetzen und den gemessenen Leitungsimpedanzwert als neuen vorgegebenen Leitungsimpedanzwert in dem Distanzschutzgerät zu parametrieren, wobei das Parametriermodul derart ausgestaltet ist, dass
   - es den vorgegebenen Leitungsimpedanzwert des Distanzschutzgerätes durch den gemessenen Leitungsimpedanzwert nur dann ersetzt, wenn die Abweichung zwischen dem gemessenen Leitungsimpedanzwert und dem vorgegebenen Leitungsimpedanzwert nach Betrag und/oder Phase einen vorgegebenen Schwellenwert überschreitet und
   - dass das Distanzschutzgerät geeignet ist, nach einer Parametrierung durch das Parametriermodul das Fehlersignal unter Heranziehung des neuen vorgegebenen Leitungsimpedanzwertes zu erzeugen.

2. Distanzschutzanordnung nach Anspruch 1,
   **dadurch gekennzeichnet, dass**
   das Distanzschutzgerät und das weitere Gerät derart synchronisiert sind, dass die ersten und die zweiten Spannungs- und Strommesswerte zeitsynchron gemessen werden.

3. Distanzschutzanordnung nach Anspruch 1 oder 2,
   **dadurch gekennzeichnet, dass**
   die Distanzschutzanordnung ein Warnmodul aufweist, das geeignet ist, ein Warnsignal zu erzeugen, wenn die Abweichung zwischen dem gemessenen Leitungsimpedanzwert und dem vorgegebenen Leitungsimpedanzwert nach Betrag und/oder Phase einen vorgegebenen weiteren Schwellenwert überschreitet.

4. Distanzschutzanordnung nach Anspruch 3,
   **dadurch gekennzeichnet, dass**
   der eine Schwellenwert kleiner bemessen ist als der weitere Schwellenwert.

**5.** Distanzschutzanordnung nach einem der voranstehenden Ansprüche,
**dadurch gekennzeichnet, dass**
die Leitungsimpedanzmesseinrichtung (110) zu einer Zentraleinrichtung (100) gehört, die von dem Distanzschutzgerät und dem weiteren Gerät getrennt ist und in die die ersten und zweiten Spannungs- und Strommesswerte eingespeist werden.

**6.** Distanzschutzanordnung nach einem der voranstehenden Ansprüche 1-4,
**dadurch gekennzeichnet, dass**

- die Leitungsimpedanzmesseinrichtung in dem Distanzschutzgerät implementiert ist und durch ein Funktionsmodul des Distanzschutzgeräts gebildet ist, wobei
- das Funktionsmodul über eine Datenverbindung (300) mit dem weiteren Gerät verbunden ist und über diese die zweiten Spannungs- und Strommesswerte des weiteren Gerätes erhält.

**7.** Distanzschutzanordnung nach einem der voranstehenden Ansprüche 1-4,
**dadurch gekennzeichnet,**

- **dass** das Distanzschutzgerät über eine Datenverbindung mit dem weiteren Gerät verbunden ist und über diese die zweiten Spannungs- und Strommesswerte des weiteren Gerätes erhält und
- **dass** die Leitungsimpedanzmesseinrichtung in einer separaten, an das Distanzschutzgerät angeschlossenen Kontrolleinrichtung (400) enthalten ist, die die ersten Spannungs- und Strommesswerte von dem Distanzschutzgerät unmittelbar und die zweiten Spannungs- und Strommesswerte von dem weiteren Gerät mittelbar erhält, nämlich über das Distanzschutzgerät.

**8.** Distanzschutzanordnung nach einem der voranstehenden Ansprüche,
**dadurch gekennzeichnet, dass**
die Leitungsimpedanzmesseinrichtung durch ein Programmmodul gebildet ist, das geeignet ist, mit Zeitstempeln versehene Störschriebe zumindest zweier elektrischer Geräte, nämlich zumindest die Störschriebe des Distanzschutzgeräts und die Störschriebe des weiteren Geräts, zu verarbeiten.

**9.** Distanzschutzanordnung nach einem der voranstehenden Ansprüche,
**dadurch gekennzeichnet, dass**
das weitere Gerät durch ein zweites Distanzschutzgerät gebildet ist.

**10.** Verfahren zum Betreiben einer Distanzschutzanordnung (10) und zum Überwachen einer elektrischen Energieübertragungsleitung (40), wobei bei dem Verfahren

- mit einem Distanzschutzgerät (20), das an einem Ende (30) der Energieübertragungsleitung angeschlossen ist, Spannung und Strom an dem einen Ende unter Bildung von ersten Spannungs- und Strommesswerten (U1, I1) gemessen werden,
- mit dem Distanzschutzgerät unter Heranziehung der ersten Spannungs- und Strommesswerte und eines vorgegebenen Leitungsimpedanzwertes ($Z_{Ltg}$), der sich auf die Leitungsimpedanz der Energieübertragungsleitung nach Betrag und/oder Phase bezieht, die Energieübertragungsleitung überwacht und im Falle eines Fehlers auf der Energieübertragungsleitung ein Fehlersignal erzeugt wird, und
- mit einem weiteren Gerät (60), das an dem anderen Ende (50) der Energieübertragungsleitung angeschlossen ist, Spannung und Strom an dem anderen Ende unter Bildung von zweiten Spannungs- und Strommesswerten (U2, 12) gemessen werden,

**dadurch gekennzeichnet, dass**

- unter Heranziehung der ersten und zweiten Spannungs- und Strommesswerte die Leitungsimpedanz der Energieübertragungsleitung berechnet und ein gemessener Leitungsimpedanzwert ($Z_{Ltg}'$) gebildet wird, und
- der gemessene Leitungsimpedanzwert bei der weiteren Überwachung der Energieübertragungsleitung berücksichtigt wird, indem
- das Distanzschutzgerät nach der Bildung eines berechneten Leitungsimpedanzwerts jeweils automatisch neu parametriert wird, indem der zuvor vorgegebene Leitungsimpedanzwert des Distanzschutzgerätes ersetzt wird und der neu gemessene Leitungsimpedanzwert als neuer vorgegebener Leitungsimpedanzwert weiterverwendet wird, wobei
- der neu gemessene Leitungsimpedanzwert mit dem zuvor vorgegebenen Leitungsimpedanzwert verglichen wird und
- der zuvor vorgegebene Leitungsimpedanzwert durch den neu gemessenen Leitungsimpedanzwert nur dann ersetzt wird,
- wenn die Abweichung zwischen dem neu gemessenen Leitungsimpedanzwert und dem zuvor vorgegebenen Leitungsimpedanzwert nach Betrag und/oder Phase einen vorgegebenen Schwellenwert überschreitet und
- dass nach einer jeden neuen Parametrierung bei der weiteren Überwachung der Energieübertragungsleitung jeweils der neue vorgegebene Leitungsimpedanzwert berücksichtigt wird.

**11.** Verfahren nach Anspruch 10,
**dadurch gekennzeichnet, dass**

- die ersten und die zweiten Spannungs- und Strommesswerte zeitsynchron gebildet werden und
- unter Heranziehung der zeitsynchronen ersten und zweiten Spannungs- und Strommesswerte die Leitungsimpedanz berechnet wird.

**12.** Verfahren nach Anspruch 10 oder 11,
**dadurch gekennzeichnet, dass**
der gemessene Leitungsimpedanzwert berücksichtigt wird, indem

- der gemessene Leitungsimpedanzwert mit dem vorgegebenen Leitungsimpedanzwert verglichen wird und ein vor einem Auslösefehler der Distanzschutzanordnung warnendes Warnsignal erzeugt wird, wenn die Abweichung zwischen dem gemessenen Leitungsimpedanzwert und dem vorgegebenen Leitungsimpedanzwert nach Betrag und/oder Phase einen vorgegebenen Schwellenwert überschreitet.

**13.** Verfahren nach einem der voranstehenden Ansprüche 10-12,
**dadurch gekennzeichnet, dass**
unter Heranziehung des jeweils vorgegebenen Leitungsimpedanzwertes zumindest ein Auslösegebiet in der komplexen Impedanzebene gebildet wird und das Fehlersignal erzeugt wird, wenn zumindest eine mit den ersten Spannungs- und Strommesswerten gebildete Leiter-Erde- oder Leiter-Leiter-Impedanz innerhalb des Auslösegebiets liegt.


**Claims**

**1.** Distance protection arrangement (10) for monitoring an electrical power transmission line (40),

- comprising a distance protection apparatus (20), which is connected to one end (30) of the power transmission line and is suitable for measuring voltage and current at said one end to form first voltage and current measurement values (U1, I1)
- wherein the distance protection apparatus is additionally suitable, with the first voltage and current measurement values with the use of a predefined line impedance value ($Z_{Ltg}$) relating to the line impedance of the power transmission line according to magnitude and/or phase, for monitoring the electrical power transmission line for a fault and, if appropriate, for generating a fault signal (ST1) indicating the fault on the power transmission line, and wherein

- the distance protection arrangement comprises a further apparatus (60), which is connected to the other end (50) of the power transmission line and is suitable for measuring voltage and current at the other end to form second voltage and current measurement values (U2, I2),

**characterized in that**

- the distance protection arrangement comprises a line impedance measuring device (110), which is suitable, with the use of the first and second voltage and current measurement values, for calculating the line impedance of the power transmission line and for providing a measured line impedance value ($Z_{Ltg}$'), and
- the distance protection arrangement is suitable for taking account of said measured line impedance value during the further monitoring of the power transmission line, wherein
- the distance protection arrangement comprises a parameterizing module (130) which is suitable for replacing the predefined line impedance value of the distance protection apparatus by the measured line impedance value and for parameterizing the measured line impedance value as new predefined line impedance value in the distance protection apparatus, wherein the parameterizing module is configured in such a way that
- it replaces the predefined line impedance value of the distance protection apparatus by the measured line impedance value only if the deviation between the measured line impedance value and the predefined line impedance value exceeds a predefined threshold value according to magnitude and/or phase, and
- the distance protection apparatus is suitable, after a parameterization by the parameterizing module for generating the fault signal with the use of the new predefined line impedance value.

**2.** Distance protection arrangement according to Claim 1,
**characterized in that**
the distance protection apparatus and the further apparatus are synchronized in such a way that the first and the second voltage and current measurement values are measured time-synchronously.

**3.** Distance protection arrangement according to Claim 1 or 2,
**characterized in that**
the distance protection arrangement comprises a warning module, which is suitable for generating a warning signal if the deviation between the measured line impedance value and the predefined line impedance value exceeds a predefined further threshold value according to magnitude and/or phase.

4.  Distance protection arrangement according to Claim 3,
    **characterized in that**
    the initial threshold value is dimensioned to be smaller than the further threshold value.

5.  Distance protection arrangement according to any of the preceding claims,
    **characterized in that**
    the line impedance measuring device (110) belongs to a central device (100) which is separate from the distance protection apparatus and the further apparatus and into which the first and second voltage and current measurement values are fed.

6.  Distance protection arrangement according to any of the preceding Claims 1-4,
    **characterized in that**

    - the line impedance measuring device is implemented in the distance protection apparatus and is formed by a function module of the distance protection apparatus, wherein
    - the function module is connected to the further apparatus via a data connection (300) and, via the latter, obtains the second voltage and current measurement values of the further apparatus.

7.  Distance protection arrangement according to any of the preceding Claims 1-4,
    **characterized**

    - **in that** the distance protection apparatus is connected to the further apparatus via a data connection and, via the latter, obtains the second voltage and current measurement values of the further apparatus, and
    - **in that** the line impedance measuring device is contained in a separate control device (400) which is connected to the distance protection apparatus and which obtains the first voltage and current measurement values from the distance protection apparatus directly and the second voltage and current measurement values from the further apparatus indirectly, namely via the distance protection apparatus.

8.  Distance protection arrangement according to any of the preceding claims,
    **characterized in that**
    the line impedance measuring device is formed by a program module suitable for processing disturbance records of at least two electrical apparatuses, said disturbance records being provided with time stamps, namely at least the disturbance records of the distance protection apparatus and the disturbance records of the further apparatus.

9.  Distance protection arrangement according to any of the preceding claims,
    **characterized in that**
    the further apparatus is formed by a second distance protection apparatus.

10. Method for operating a distance protection arrangement (10) and for monitoring an electrical power transmission line (40), wherein in the method

    - by means of a distance protection apparatus (20) connected to one end (30) of the power transmission line, voltage and current at said one end are measured to form first voltage and current measurement values (U1, I1)
    - by means of the distance protection apparatus, with the use of the first voltage and current measurement values and a predefined line impedance value ($Z_{Ltg}$) relating to the line impedance of the power transmission line according to the magnitude and/or phase, the power transmission line is monitored and a fault signal is generated in the case of a fault on the power transmission line, and
    - by means of a further apparatus (60) connected to the other end (50) of the power transmission line, voltage and current at the other end are measured to form second voltage and current measurement values (U2, I2),

    **characterized in that**

    - with the use of the first and second voltage and current measurement values, the line impedance of the power transmission line is calculated and a measured line impedance value ($Z_{Ltg}'$) is formed, and
    - the measured line impedance value is taken into account during the further monitoring of the power transmission line by virtue of the fact that
    - the distance protection apparatus, after the formation of a calculated line impedance value, is in each case automatically parameterized anew by the previously predefined line impedance value of the distance protection apparatus being replaced and the newly measured line impedance value being used further as new predefined line impedance value, wherein
    - the newly measured line impedance value is compared with the previously predefined line impedance value and
    - the previous predefined line impedance value is replaced by the newly measured line impedance value only

- if the deviation between the newly measured line impedance value and the previously predefined line impedance value exceeds a predefined threshold value according to magnitude and/or phase, and

- that the new predefined line impedance value is in each case taken into account after each new parameterization during the further monitoring of the power transmission line.

**11.** Method according to Claim 10, **characterized in that**

- the first and the second voltage and current measurement values are formed time-synchronously, and

- the line impedance is calculated with the use of the time-synchronous first and second voltage and current measurement values.

**12.** Method according to Claim 10 or 11, **characterized in that** the measured line impedance value is taken into account by

- the measured line impedance value being compared with the predefined line impedance value and a warning signal - which warns of a triggering fault of the distance protection arrangement - is generated if the deviation between the measured line impedance value and the predefined line impedance value exceeds a predefined threshold value according to magnitude and/or phase.

**13.** Method according to any of the preceding Claims 10-12, **characterized in that** with the use of the respectively predefined line impedance value, at least one triggering region is formed in the complex impedance plane and the fault signal is generated if at least one conductor-earth or conductor-conductor impedance formed with the first voltage and current measurement values lies within the triggering region.

## Revendications

**1.** Système (10) de protection à distance pour contrôler une ligne (40) de transport d'énergie électrique,

- comprenant un appareil (20) de protection à distance, qui est raccordé à une extrémité (30) de la ligne de transport d'énergie et qui est propre à mesurer la tension et le courant à la une extrémité, en formant des premières valeurs (U1, I1) de mesure de la tension et du courant,

- dans lequel l'appareil de protection à distance est propre en outre à contrôler, avec les premières valeurs de mesure de la tension et du courant, en tirant partie d'une valeur ($Z_{Ltg}$) d'impédance de la ligne donnée à l'avance qui se rapporte à l'impédance de la ligne de transport d'énergie en valeur absolue et/ou en phase, la présence d'un défaut sur la ligne de transport d'énergie électrique et à produire, le cas échéant, un signal (ST1) de défaut, qui indique le défaut sur la ligne de transport d'énergie et dans lequel

- le système de protection à distance comprend un autre appareil (60), qui est raccordé à l'autre extrémité (50) de la ligne de transport d'énergie et qui est propre à mesurer la tension et le courant à l'autre extrémité avec formation de deuxièmes valeurs (U2, 12) de mesure de la tension et du courant,

**caractérisé en ce que**

- le système de protection à distance a un dispositif (110) de mesure de l'impédance de la ligne, qui est propre, en tirant partie des premières et deuxièmes valeurs de mesure de la tension et du courant, à calculer l'impédance de la ligne de transport d'énergie et à mettre à disposition une valeur ($Z_{Ltg}$') mesurée d'impédance de la ligne et

- le système de protection à distance est propre à tenir compte de cette valeur mesurée d'impédance de la ligne lors du contrôle ultérieur de la ligne de transport d'énergie, dans lequel

- le système de protection à distance a un module (130) de paramétrage, qui est propre à remplacer la valeur donnée à l'avance d'impédance de la ligne de l'appareil de protection à distance, par la valeur mesurée d'impédance de la ligne et à paramétrer la valeur mesurée d'impédance de la ligne comme nouvelle valeur donnée à l'avance d'impédance de la ligne dans l'appareil de protection à distance, le module de paramétrage étant conformé de manière à

- ne remplacer la valeur donnée à l'avance d'impédance de la ligne de l'appareil de protection à distance par la valeur mesurée de l'impédance de la ligne, que si l'écart, entre la valeur mesurée d'impédance de la ligne et la valeur donnée à l'avance d'impédance de la ligne, dépasse, en valeur absolue et/ou en phase, une valeur de seuil donnée à l'avance et

- **en ce que** l'appareil de protection à distance est propre à produire, après un paramétrage par le module de paramétrage, le signal de défaut, en tirant partie de la nouvelle valeur donnée à l'avance d'impédance de la ligne.

**2.** Système de protection à distance suivant la revendication 1,
**caractérisé en ce que**
l'appareil de protection à distance et l'autre appareil sont synchronisés, de manière à mesurer, en synchronisme dans le temps, les premières et deuxièmes valeurs de mesure de la tension et du courant.

**3.** Système de protection à distance suivant la revendication 1 ou 2,
**caractérisé en ce que**
le système de protection à distance a un module d'alerte, qui est propre à produire un signal d'alerte si l'écart, entre la valeur mesurée d'impédance de la ligne et la valeur donnée, à l'avance d'impédance de la ligne, dépasse en valeur absolue et/ou en phase une autre valeur de seuil donnée à l'avance.

**4.** Système de protection à distance suivant la revendication 3,
**caractérisé en ce qu'**
une valeur de seuil est plus petite que l'autre valeur de seuil.

**5.** Système de protection à distance suivant l'une des revendications précédentes,
**caractérisé en ce que**
le dispositif (110) de mesure de l'impédance de la ligne appartient à un dispositif (100) central, qui est séparé de l'appareil de protection à distance et de l'autre appareil et dans lequel sont entrées les premières et deuxièmes valeurs de mesure de la tension et du courant.

**6.** Système de protection à distance suivant l'une des revendications précédentes 1 à 4,
**caractérisé en ce que**

- le dispositif de mesure de l'impédance de la ligne est mis en oeuvre dans l'appareil de protection à distance et est formé par un module fonctionnel de l'appareil de protection à distance, dans lequel
- le module fonctionnel est relié à l'autre appareil par une liaison (300) de données et reçoit par celle-ci les deuxièmes valeurs de mesure de la tension et du courant de l'autre appareil.

**7.** Système de protection à distance suivant l'une des revendications précédentes 1 à 4,
**caractérisé**

- **en ce que** l'appareil de protection à distance est relié à l'autre appareil par une liaison de données et reçoit par celle-ci les deuxièmes valeurs de mesure de la tension et du courant de l'autre appareil et
- **en ce que** le dispositif de mesure de l'impédance de la ligne est contenu dans un dispositif (400) de contrôle distinct raccordé à l'appareil de protection à distance et qui reçoit les premières valeurs de mesure de la tension et du courant de l'appareil de protection à distance directement et les deuxièmes valeurs de mesure de la tension et du courant de l'autre appareil indirectement, à savoir par l'appareil de protection à distance.

**8.** Système de protection à distance suivant l'une des revendications précédentes,
**caractérisé en ce que**
le dispositif de mesure de l'impédance de la ligne est formé par un module de programme, qui est propre à traiter des messages de perturbation pourvus d'horodatage d'au moins deux appareils électriques, à savoir d'au moins les messages de perturbation de l'appareil de protection à distance et les messages de perturbation de l'autre appareil.

**9.** Système de protection à distance suivant l'une des revendications précédentes,
**caractérisé en ce que**
l'autre appareil est formé par un deuxième appareil de protection à distance.

**10.** Procédé pour faire fonctionner un système (10) de protection à distance et pour contrôler une ligne (40) de transport d'énergie électrique, dans lequel, dans le procédé

- on mesure, par un appareil (20) de protection à distance, qui est raccordé à une extrémité (30) de la ligne de transport d'énergie, la tension et le courant à la une extrémité, avec formation de premières valeurs (U1, I1) de mesure de la tension et du courant,
- on contrôle, par l'appareil de protection à distance, en tirant partie des premières valeurs de mesure de la tension et du courant et d'une valeur (Z$_{Ltg}$) donnée à l'avance d'impédance de la ligne, qui se rapportent à l'impédance de la ligne de transport d'énergie en valeur absolue ou/en phases, la ligne de transport d'énergie et, dans le cas d'un défaut de la ligne de transport d'énergie, on produit un signal de défaut et
- par un autre appareil (60), qui est raccordé à l'autre extrémité (50) de la ligne de transport d'énergie, on mesure le courant et la tension à l'autre extrémité, avec formation de deuxièmes valeurs (U2, 12) de mesure de la tension et du courant,

**caractérisé en ce que**

- en tirant partie des premières et deuxièmes valeurs de mesure de la tension et du courant, on calcule l'impédance de la ligne de transport d'énergie et on forme une valeur ($Z_{Ltg}$') mesurée d'impédance de la ligne et

- on tient compte de la valeur mesurée d'impédance de la ligne lorsqu'on continue à contrôler la ligne de transport d'énergie

- en reparamétrant automatiquement l'appareil de protection à distance, après la formation d'une valeur calculée de l'impédance de la ligne, en remplaçant la valeur donnée à l'avance auparavant de l'impédance de la ligne de l'appareil de protection à distance et en utilisant la valeur mesurée nouvellement de l'impédance de la ligne, comme nouvelle valeur donnée à l'avance de l'impédance de la ligne, dans lequel

- on compare la valeur mesurée nouvellement de l'impédance de la ligne à la valeur donnée à l'avance auparavant de l'impédance de la ligne et

- on ne remplace la valeur donnée à l'avance auparavant de l'impédance de la ligne par la valeur mesurée nouvellement de l'impédance de la ligne, que

- si l'écart, entre la valeur mesurée nouvellement de l'impédance de la ligne et la valeur donnée à l'avance auparavant de l'impédance de la ligne, dépasse en valeur absolue et/ou en phase une valeur de seuil donnée à l'avance et

- **en ce qu'**après un nouveau paramétrage, on tient compte, lorsque l'on continue à contrôler la ligne de transport d'énergie, de la valeur nouvelle donnée à l'avance de l'impédance de la ligne.

**11.** Procédé suivant la revendication 10, **caractérisé en ce qu'**

- on forme, en synchronisme dans le temps, les premières et les deuxièmes valeurs de la tension et du courant et

- on calcule l'impédance de la ligne en tirant partie des premières et deuxièmes valeurs de mesure de la tension et du courant synchrones dans le temps.

**12.** Procédé suivant la revendication 10 ou 11, **caractérisé en ce qu'**
on tient compte de la valeur mesurée de l'impédance de la ligne en

- comparant la valeur mesurée d'impédance de la ligne à la valeur donnée à l'avance d'impédance de la ligne et en produisant un signal d'alerte, avant une erreur de déclenchement du dispositif de protection à distance, si l'écart, entre la valeur mesurée de l'impédance de la ligne et la valeur donnée à l'avance de l'impédance de la ligne, dépasse, en valeur absolue et/ou en phase, une valeur de seuil donnée à l'avance.

**13.** Procédé suivant l'une des revendications 10 à 12, **caractérisé en ce que**
en tirant partie de la valeur donnée à l'avance de l'impédance de la ligne, on forme au moins un domaine de déclenchement dans le plan de l'impédance complexe et on produit le signal d'erreur si au moins une impédance conducteur-terre ou conducteur-conducteur, formée avec les premières valeurs de mesure de la tension et du courant, se trouve dans le domaine de déclenchement.

Fig. 1

Fig. 2

Fig. 3

Fig. 4

Fig. 5

Fig. 6

EP 2 238 664 B1

Fig. 7

Fig. 8

Fig. 9

Fig. 10

EP 2 238 664 B1

Fig. 11

Fig. 12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1416603 A